# EUROPEAN PATENT SPECIFICATION

(11) **EP 0 492 777 B1**
(45) Date of publication and mention of the grant of the patent: **10.05.1995**
(21) Application number: 91309076.7
(22) Date of filing: 03.10.1991
(51) Int. Cl.: C09K 5/04

(54) **Multi-component refrigerant**
Mehrkomponenten-Kühlmittel
Refrigérant multicomposant

(30) Priority: 05.12.1990 GB 9026512
(43) Date of publication of application: 01.07.1992
(73) Proprietor: Star Refrigeration Ltd., Glasgow G46 8JW, Scotland (GB)
(72) Inventor: Pearson, Stephen Forbes, Bearsden, Glasgow G61 1PZ (GB)
(74) Representative: Horner, Martin Grenville

(56) References cited:
- EP-A- 0 299 614
- EP-A- 0 419 042
- EP-A- 0 419 042
- GB-A- 2 228 739

## Description

The present invention relates to a multi-component refrigerant mixture for use in refrigeration apparatus which has improved environmental acceptability.

In refrigeration apparatus, two commonly used refrigerants have been the chlorofluorocarbon gases (CFC) referred to as refrigerant 12 (CCl₂F₂) and refrigerant 502 (an azeotrope of R115 (CClF₂CF₃) and R22 (CHClF₂)). However, refrigerants 12 and 502 have been implicated in causing environmental damage. Specifically, these gases, which are very inert, are released from refrigeration systems, aerosols, foam packaging etc. at ground level and diffuse into the upper atmosphere. Because of their inertness, the gases are able to survive without decomposition until they reach the stratosphere where they are broken down by ultra-violet radiation, releasing chlorine atoms which catalyse breakdown of the stratospheric ozone layer. There has recently been considerable concern about reductions in stratospheric ozone levels and this has led to proposed bans on certain CFC'S such as refrigerants 11 and 12. Other refrigerants such as refrigerant 22 (CHClF₂) and refrigerant 125 (CHF₂CF₃) are environmentally less objectionable as they tend to be naturally degraded at lower levels of the atmosphere before reaching the ozone layer.

Considerable efforts are being made to replace refrigerants 12 and 502 with more environmentally acceptable alternatives. However, such new chemicals are generally unavailable at present and are expected to be considerably more expensive than presently used refrigerants.

Whilst refrigerant 22 is environmentally more acceptable, it has a higher index of compression than, for example, refrigerant 12. This means that compressor discharge temperatures become excessive at pressure ratios which would not cause excessive discharge temperatures if refrigerant 12 were being used.

Refrigerant R125 (CHF₂CF₃) has no ozone depleting potential. However, it is only now becoming commercially available and is very expensive to use alone.

Hydrocarbons have certain useful thermodynamic properties which may allow their use as refrigerants.

However, hydrocarbons have the significant disadvantage of forming inflammable mixtures with air, which poses a safety hazard in the event of leakage of refrigerant.

US Patent Specification 2511993 discloses the use of an azeotropic mixture of propane (290-32% by weight) and R22 as a refrigerant.

Japanese Patent Specification 63-105088 discloses mixtures of propane with R22 and R143A (CF₃CH₃) which would be flammable.

Propylene (R1270) is another flammable hydrocarbon with properties which give refrigerating effects similar to those of refrigerant R502.

The assessment of flammability characteristics is not necessarily predictable, depending on a variety of factors including the nature of the CFC and its effect on the combustion process.

It is an object of the present invention to provide non-flammable mixtures of certain hydrocarbons with CFC refrigerants in suitable proportions such as to impart the required overall refrigerant characteristics for use in a vapour compression refrigerators (such as pressure/temperature relationship, specific heat ratio, latent heat of vapourisation, compression ratio, acoustic velocity, vapour density, heat transfer properties, and water and oil solubility properties) whilst at the same time being of improved environmental acceptability, and at reasonable cost.

A first aspect of the invention provides a non-flammable refrigerant composition for use in a refrigerant apparatus which comprises a mixture of three different components:
(i) a refrigerant selected from chlorodifluoromethane (R22) and pentafluoroethane (R125);
(ii) a refrigerant selected from pentafluoroethane (R125) and octafluoropropane (R218); and
(iii) a hydrocarbon selected from propylene and propylene-propane mixtures; in non-flammable proportions.

A second aspect provides a method of refrigeration which employs the composition as refrigerant medium.

The gases are used in proportions which constitute a non-flammable mixture. Such mixture may or may not constitute an azeotropic mixture (i.e. a constant boiling mixture). Usually component (i) provides the major portion of the composition.

The effect of the hydrocarbon is to reduce the index of compression of the composition. The presence of relatively large proportions of the CFC components R22, R125 and R218 renders the composition non-flammable. In this way, the disadvantages of the various CFC'S and the flammability of the hydrocarbon are avoided. In particular, the composition provides a non-toxic, non-flammable refrigerant with low index of compression, good miscibility with lubricating oil and good motor cooling characteristics.

The composition is non-flammable so that in the event of a leak of refrigerant medium into the atmosphere, no explosive or flammable mixture is produced. In particular, a non-flammable composition is one which contains the gases in such a ratio that when the composition is mixed with air in practical proportions (e.g. in the event of a leak) no flammable mixture results.

Overall, the proportions of the components are preferably in the following proportions by weight:
(i) 50 - 95 wt% (usually 65-90 wt%)
(ii) 3 - 35 wt% (usually 5-25 wt%)
(iii) 2 - 20 wt% (usually 3-15 wt%)
such that the composition is non-flammable.

Compositions comprising R22, R125 and hydrocarbon are preferably in the following proportions:
(i) 65 - 75 wt% of R22;
(ii) 15 - 25 wt% of R125; and
(iii) 5 - 15 wt% of hydrocarbon.

Compositions comprising R22, R218 and hydrocarbon are preferably in the following proportions:
(i) 60 - 90 wt% of R22;
(ii) 6 - 30 wt% of R218; and
(iii) 5 - 15 wt% of hydrocarbon.

Compositions comprising R125, R218 and hydrocarbon are generally in the following proportions:
(i) 80 - 90 wt% of R125;
(ii) 5 - 15 wt% of R218; and
(iii) 3 - 10 wt% of hydrocarbon.

The hydrocarbon component may be propylene or a mixture of propylene and propane. Propylene has a boiling point of -47°C, and in comparison with propane has a slightly higher index of compression, lower molecular weight, and slightly lower swept volume per unit of refrigeration capacity. In a standard refrigeration cycle propylene has a compressor discharge temperature of 42°C which is slightly higher than that of propane (36°C).

The refrigerant compositions of the present invention can be used to replace presently used refrigerants with little modification to the apparatus or operating parameters, and provide acceptable coefficients of performance.

Embodiments of the present invention will now be described in the following Examples. Figures 1 to 5 show refrigerant performance data for Example 1, Figure 6 shows a test apparatus used in the flammability testing described in Example 2 and Figure 7 shows experimentally determined flammability limits.

### Example 1 (Refrigerant Performance)

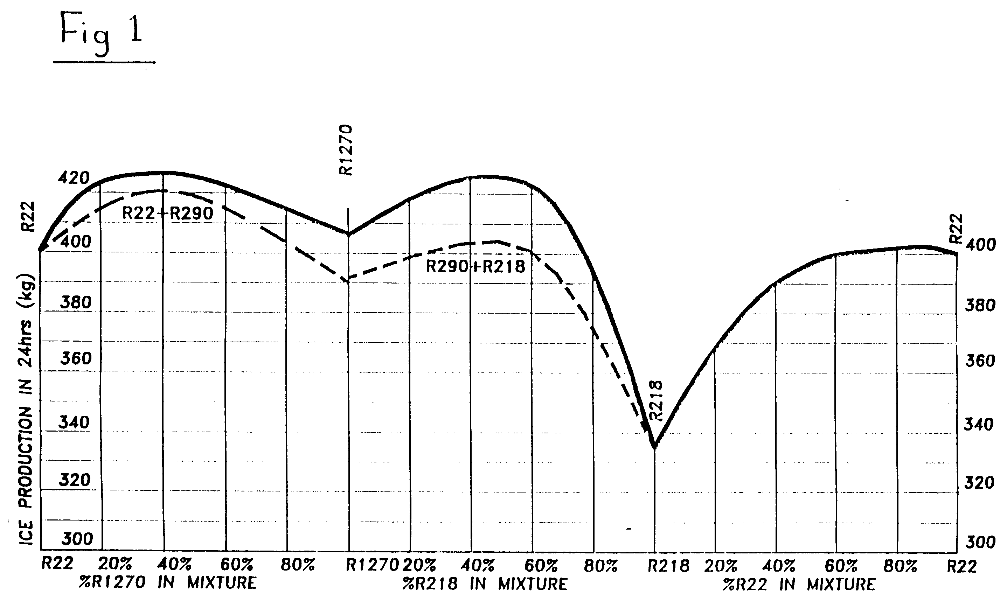

A refrigerant test rig was constructed with the object of testing various refrigerants and refrigerant mixtures under practical operating conditions. The test rig consisted of a continuous ice maker fed with refrigerant by an HP float type metering (trademark) device. The refrigerant was compressed by a fully sealed compressor and condensed in a water cooled condenser. Provision was made for measuring the rate of ice production, the weight of condensing water flow, the compressor suction and discharge pressures and refrigerant temperatures and water temperatures at various points. Provision was also made for measuring the power consumption of the compressor and the compressor motor winding temperatures. The results are shown in Figures 1 to 5 wherein:
- Figure 1: shows normalised ice production (kg) in 24 hours for binary mixtures of R22, R1270 and R218. Results are adjusted to a base condenser inlet temperature of 12°C; the adjustment coefficient = ± 2.8 kg/K;

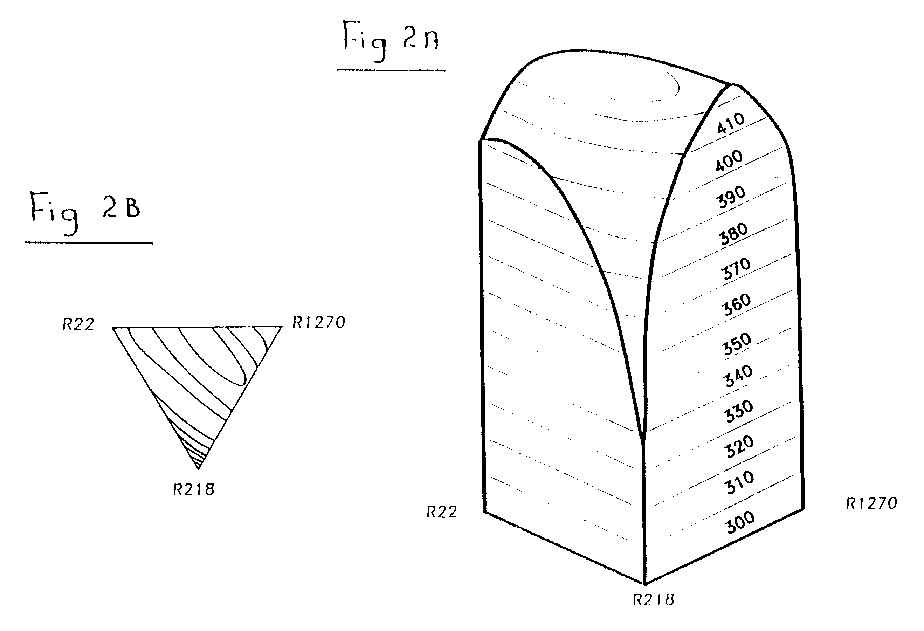

- Figures 2A and 2B: are a graphical representation, and plan view thereof respectively, of ice-maker performance for different mixtures of R22, R1270 and R218 (units as for Figure 1);

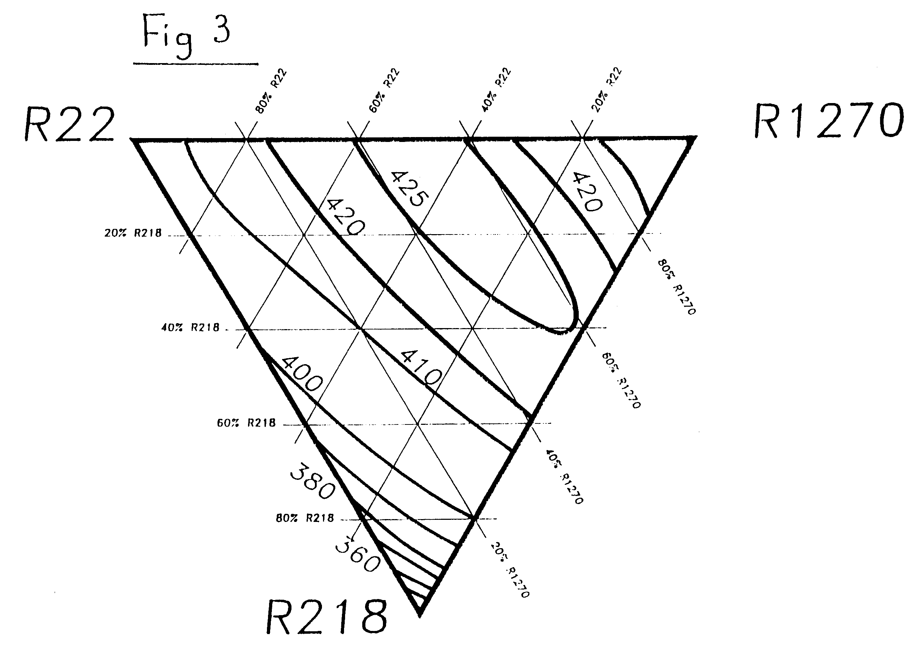

- Figure 3: is a map of ice production contours for ternary refrigerant mixtures of R22, R1270 and R218 (units as for Figure 1);

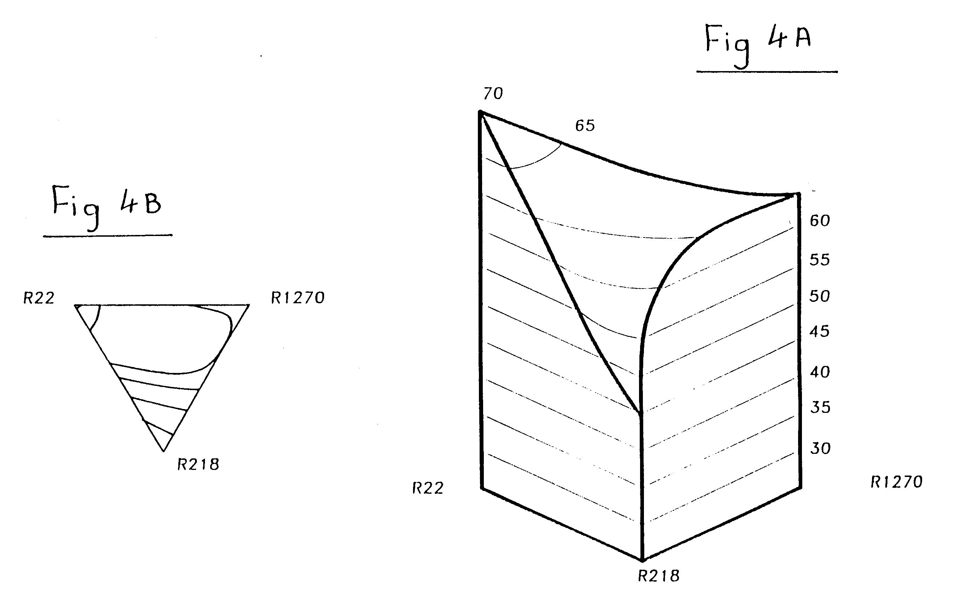

- Figures 4A and 4B: are a graphical representation, and plan view thereof respectively, of discharge temperature °C for different mixtures of R22, R1270 and R218;

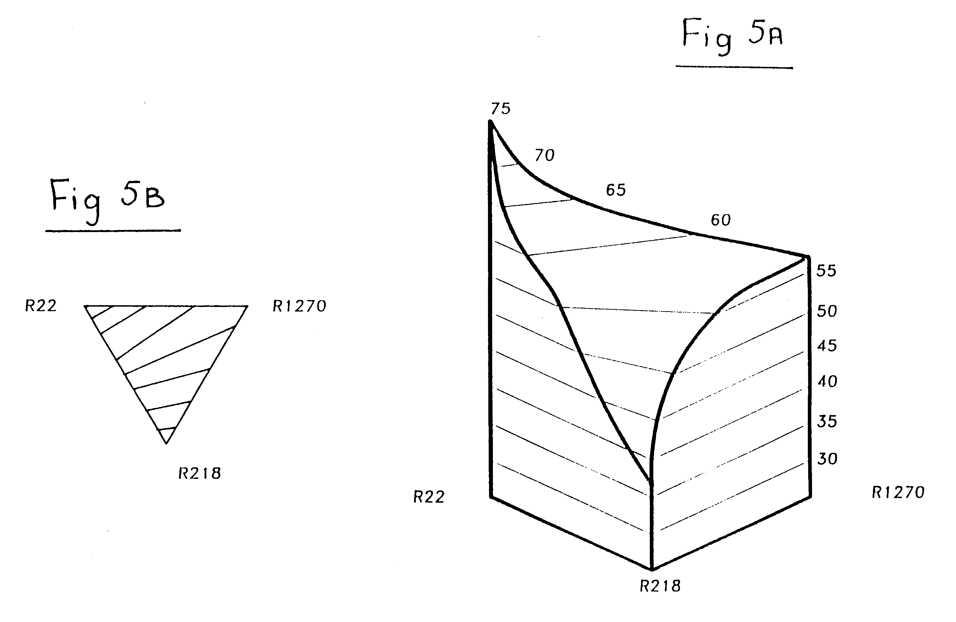

- Figures 5A and 5B: are a graphical representation and plan view thereof respectively, of winding temperature °C for different mixtures of R22, R1270 and R218;

### Example 2 (Flammability Measurement)

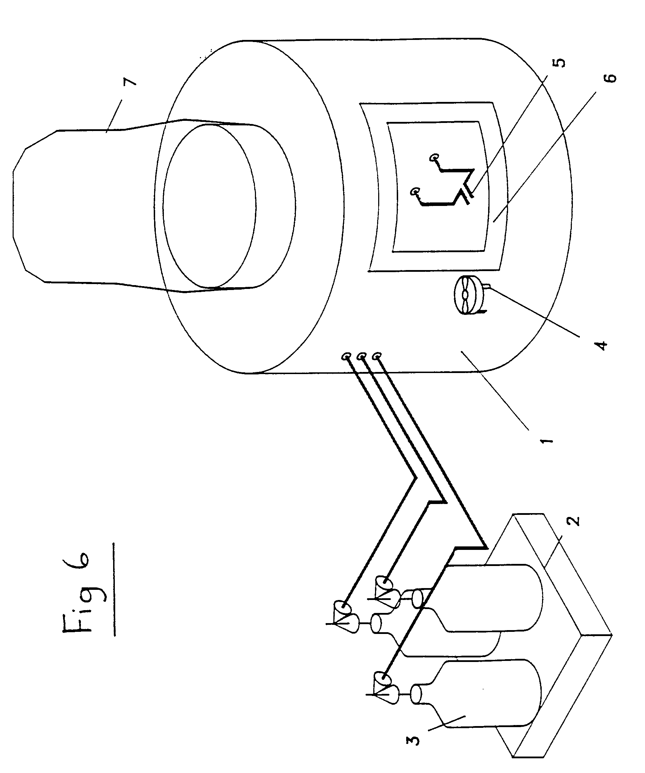

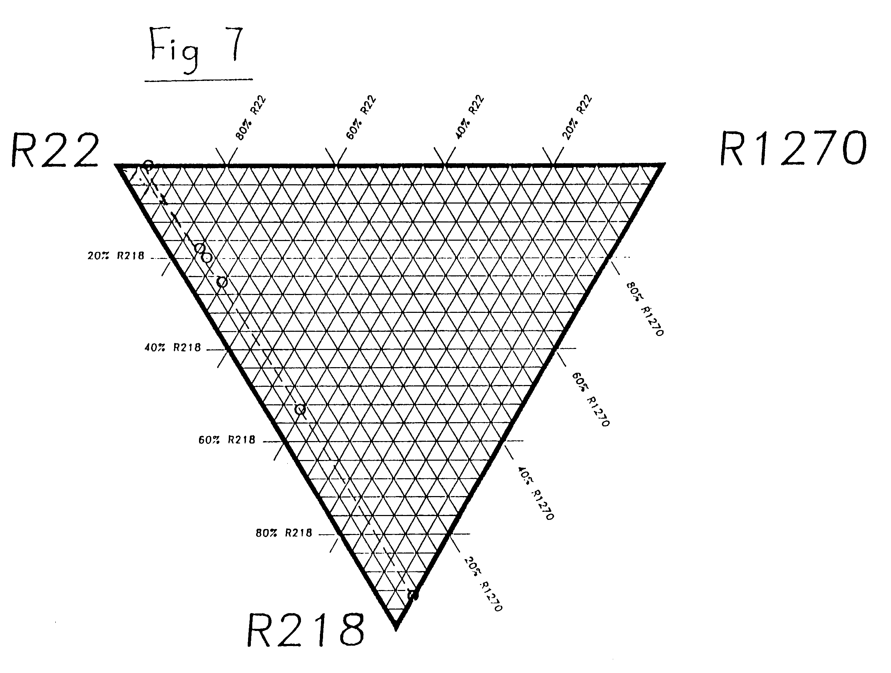

It is an object of the present invention to mix the three components of the new refrigerant in proportions which are non-flammable. An apparatus was constructed to test the flammability of various refrigerant mixtures. The apparatus consisted of a metal box 1 (0.5 m³) with three refrigerant connections attached to three refrigerant cylinders 3 located on electronic scales 2 weighing to 0.001 Kg, as indicated in Figure 6. The metal box had rigid perspex windows on two sides and an aperture on the third side which could be covered with thin transparent plastics film 6. A hole was cut in the top of the box so that an inflatable plastic bag 7 could be sealed in place. The box contained a small fan 4 to ensure adequate mixing and a pair of electrodes 5 to provide a spark with which to ignite the mixture if possible. In order to make sure that there was enough energy in the spark to ignite the mixture if at all possible, an 11,000 volt transformer was used to provide the spark which was about 12mm long. During flammability tests the refrigerants were added to the air in the box in predetermined proportions. At the start of the test the bag on top of the box was deflated. As refrigerant was added to the box the bag progressively inflated. The test was terminated before significant internal pressures, which might have caused significant leakage from the box, were developed. At each stage of an individual test the R22 was added first, the R218 next and the flammable hydrocarbon last. After an interval of about 30 seconds to allow mixing within the apparatus, the spark was switched on for a few seconds. If ignition did not take place the concentration of the refrigerant mixture in the predetermined proportions was increased by adding more refrigerant to the air in the box till the bag was approaching full inflation. The results of these flammability tests were consistent and reproducible, and are given in Figure 7. Tests were also carried out on mixtures of pure propane (R290) in air. (It was found that pure propane could be caused to ignite at proportions slightly less those given in the literature for the lower limit of flammability. It was considered that this was probably because the very high energy of the spark and because of the large dimensions of the test chamber which minimised cooling effects from the walls. Most reported flammability testing appears to have been done in relatively small vessels with low energy sparks.) It was found that a mixture of 86% R22, 7% R218 and 7% R1270 could be induced to ignite at high concentrations in air. A mixture of 88% R22, 6% R218 and 6% R1270 could not be induced to ignite under any conditions up to concentrations of about 5 times the amount of R22 permitted as the result of an accident in a humanly occupied space.
The results of the tests in the refrigeration rig and the flammability test rig indicate that non-flammable refrigerant mixtures containing R218 and R1270 can produce significant benefits in reduction of motor winding temperature, reduction in compressor discharge temperature and increase of refrigerating capacity.

## Claims

1. A non-flammable refrigerant composition for use in a refrigerant apparatus which comprises a mixture of three different components:
(i) a refrigerant selected from chlorodifluoromethane and pentafluoroethane;
(ii) a refrigerant selected from pentafluoroethane and octafluoropropane; and
(iii) a hydrocarbon selected from propylene, and propylene-propane mixtures; in non-flammable proportions.

2. A composition according to claim 1 wherein the three components are present in the following proportions by weight:
(i) 50 - 95 wt%;
(ii) 3 - 35 wt%; and
(iii) 2 - 20 wt%;
such that the composition is non flammable.

3. A composition according to claim 1 which comprises a non-flammable mixture of chlorodifluoromethane, pentafluoroethane and hydrocarbon.

4. A composition according to claim 3 which comprises:
(i) 65 - 75 wt% of chlorodifluoromethane;
(ii) 15 - 25 wt% of pentafluoroethane; and
(iii) 5 - 15 wt% of hydrocarbon.

5. A composition according to claim 1 which comprises a non-flammable mixture of chlorodifluoromethane, octafluoropropane and hydrocarbon.

6. A composition according to claim 5 which comprises:
(i) 60 - 90 wt% of chlorodifluoromethane;
(ii) 6 - 30 wt% of octafluoropropane; and
(iii) 5 - 15 wt % of hydrocarbon.

7. A composition according to claim 1 which comprises a non-flammable mixture of pentafluoroethane, octafluoropropane, and hydrocarbon.

8. A composition according to claim 7 which comprises:
(i) 80 - 90 wt% of pentafluoroethane;
(ii) 5 - 15 wt% of octafluoropropane; and
(iii) 3 - 10 wt% of hydrocarbon.

9. A composition according to any preceding claim wherein the hydrocarbon is propylene.

10. A composition according to any of claims 1 to 8 wherein the hydrocarbon is a propylene-propane mixture.

11. A method of performing vapour compression refrigeration wherein the refrigerant composition of any of claims 1 to 9 is employed.

## Patentansprüche

1. Nicht-entflammbare Kühlmittel-Zusammensetzung zur Verwendung in einer Kühlvorrichtung, die ein Gemisch aus drei verschiedenen Komponenten enthält:
(i) ein Kühlmittel ausgewählt aus Chlordifluormethan und Pentafluorethan;
(ii) ein Kühlmittel ausgewählt aus Pentafluorethan und Octafluorpropan; und
(iii) ein Kohlenwasserstoff ausgewählt aus Propylen und Propylen-Propan-Gemischen;
in nicht-entflammbaren Verhältnissen.

2. Zusammensetzung gemäß Anspruch 1, dadurch gekennzeichnet, daß die drei Komponenten in den folgenden Gewichtsverhältnissen vorliegen:
(i) 50 - 95 Gewichtsprozent;
(ii) 3 - 35 Gewichtsprozent; und
(iii) 2 - 20 Gewichtsprozent,
so daß die Zusammensetzung nicht-entflammbar ist.

3. Zusammensetzung gemäß Anspruch 1, dadurch gekennzeichnet, daß diese ein nicht-entflammbares Gemisch aus Chlordifluormethan, Pentafluorethan und Kohlenwasserstoff enthält.

4. Zusammensetzung gemäß Anspruch 3, dadurch gekennzeichnet, daß diese
(i) 65 - 75 Gewichtsprozent an Chlordifluormethan;
(ii) 15 - 25 Gewichtsprozent an Pentafluorethan; und
(iii) 5 - 15 Gewichtsprozent an Kohlenwasserstoff enthält.

5. Zusammensetzung gemäß Anspruch 1, dadurch gekennzeichnet, daß diese ein nicht-entflammbares Gemisch aus Chlordifluormethan, Octafluorpropan und Kohlenwasserstoff enthält.

6. Zusammensetzung gemäß Anspruch 5, dadurch gekennzeichnet, daß diese
(i) 60 - 90 Gewichtsprozent an Chlordifluormethan;
(ii) 6 - 30 Gewichtsprozent an Octafluorpropan; und
(iii) 5 - 15 Gewichtsprozent an Kohlenwasserstoff enthält.

7. Zusammensetzung gemäß Anspruch 1 dadurch gekennzeichnet, daß diese ein nicht-entflammbares Gemisch aus Pentafluorethan, Octafluorpropan und Kohlenwasserstoff enthält.

8. Zusammensetzung gemäß Anspruch 7, dadurch gekennzeichnet, daß diese
(i) 80 - 90 Gewichtsprozent an Pentafluorethan;
(ii) 5 - 15 Gewichtsprozent an Octafluorpropan; und
(iii) 3 - 10 Gewichtsprozent an Kohlenwasserstoff enthält.

9. Zusammensetzung gemäß einem der vorhergehenden Ansprüche, dadurch gekennzeichnet, daß der Kohlenwasserstoff Propylen ist.

10. Zusammensetzung gemäß einem der Ansprüche 1 bis 8, dadurch gekennzeichnet, daß der Kohlenwasserstoff ein Propylen-Propan-Gemisch ist.

11. Verfahren zum Ausführen von Dampfkompressions-Kühlung dadurch gekennzeichnet, daß die Kühlmittel-Zusammensetzung aus einem der Ansprüche 1 bis 9 verwendet wird.

## Revendications

1. Composition de réfrigérant ininflammable utilisable dans un appareil réfrigérant, qui comprend un mélange de trois composants différents :
**(i)** un réfrigérant choisi parmi le chlorodifluorométhane et le pentafluoroéthane,
**(ii)** un réfrigérant choisi parmi le pentafluoroéthane et l'octafluoropropane ; et
**(iii)** un hydrocarbure choisi parmi le propylène et des mélanges de propylène et de propane ;
selon des proportions ininflammables.

2. Composition suivant la revendication 1, dans laquelle les trois composants sont présents selon les proportions pondérales suivantes :
**(i)** 50 à 95% ;
**(ii)** 3 à 35% ; et
**(iii)** 2 à 20%
telles que la composition est ininflammable.

3. Composition suivant la revendication 1, qui comprend un mélange ininflammable de chlorodifluorométhane, de pentafluoroéthane et d'un hydrocarbure.

4. Composition suivant la revendication 3, qui comprend :
**(i)** 65 à 75% en poids de chlorodifluorométhane ;
**(ii)** 15 à 25% en poids de pentafluoroéthane ; et
**(iii)** 5 à 15% en poids d'un hydrocarbure.

5. Composition suivant la revendication 1, qui comprend un mélange ininflammable de chlorodifluorométhane, d'octafluoropropane et d'un hydrocarbure.

6. Composition suivant la revendication 5, qui comprend :
**(i)** 60 à 90% en poids de chlorodifluorométhane ;
**(ii)** 6 à 30% en poids d'octafluoropropane ; et
**(iii)** 5 à 15% en poids d'un hydrocarbure.

7. Composition suivant la revendication 1, qui comprend un mélange ininflammable de pentafluoroéthane, d'octafluoropropane et d'un hydrocarbure.

8. Composition suivant la revendication 7, qui comprend :
**(i)** 80 à 90% en poids de pentafluoroéthane ;
**(ii)** 5 à 15% en poids d'octafluoropropane ; et
**(iii)** 3 à 10% en poids d'un hydrocarbure.

9. Composition suivant l'une quelconque des revendications précédentes dans laquelle l'hydrocarbure est le propylène.

10. Composition selon une quelconque des revendications 1 à 8 dans laquelle l'hydrocarbone est constitué d'un mélange propylène-propane.

11. Procédé pour réaliser une réfrigération par compression de vapeur, dans lequel la composition réfrigérante suivant l'une quelconque des revendications 1 à 9 est utilisée.
